# EUROPÄISCHE PATENTSCHRIFT

(11) **EP 3 853 158 B1**
(45) Veröffentlichungstag und Bekanntmachung des Hinweises auf die Patenterteilung: **24.08.2022**
(21) Anmeldenummer: 19790420.4
(22) Anmeldetag: 16.09.2019
(51) Int. Cl.: B65G 47/91, B25J 13/00, B25J 15/06, B66C 1/02

(54) **VERFAHREN ZUM SICHEREN GREIFEN VON BAUTEILEN**
METHOD FOR SECURELY GRIPPING COMPONENTS
PROCÉDÉ PERMETTANT DE SAISIR DE MANIÈRE SÛRE DES PIÈCES

(30) Priorität: 20.09.2018 AT 508032018
(43) Veröffentlichungstag der Anmeldung: 28.07.2021
(73) Patentinhaber: TRUMPF Maschinen Austria GmbH & Co. KG., 4061 Pasching (AT)
(72) Erfinder: SECIBOVIC, Kabir, 4623 Gunskirchen (AT)
(74) Vertreter: Burger, Hannes
(86) Internationale Anmeldenummer: PCT/AT2019/060303
(87) Internationale Veröffentlichungsnummer: WO 2020/056437

(56) Entgegenhaltungen:
- EP-A1- 3 251 996
- CN-U- 207 375 329
- DE-A1-102005 045 681
- DE-U1-202012 013 422
- DE-U1-202016 101 454
- JP-A- 2013 154 968
- US-A1- 2008 011 918
- US-A1- 2015 147 141

## Beschreibung

### VERFAHREN ZUM SICHEREN GREIFEN VON BAUTEILEN

Die Erfindung betrifft ein Verfahren zum sicheren Transport von Bauteilen, insbesondere Blechteilen.

In modernen Bearbeitungszentren erfolgt der Werkstück- bzw. Bauteiltransport häufig vollautomatisiert. Um Beschädigungen der Bauteiloberfläche zu vermeiden, oder auch eine Vielzahl gleicher Bauteile greifen zu können, hat sich die Verwendung von Vakuumgreifern weithin etabliert. Gerade für die gezielte Manipulation von Blechteilen, welche einer Biegemaschine zugeführt, in dieser positioniert und von dieser im umgeformten Zustand weitertransportiert werden, bietet die Verwendung von Vakuumgreifern deutliche Vorteile gegenüber herkömmlichen Zangengreifern und dergleichen.

Dem Fachmann sind zur Aufnahme von einzelnen Bauteilen oder Werkstücken mittels einer Mehrzahl von Saugnäpfen an einem gemeinsamen Greiferkopf eines gattungsgemäßen Vakuumgreifers verschiedene Ansätze bekannt.

Beispielhaft stellt die US 2015/0147141 A1 ein Verfahren vor, in welchem ein Greiferkopf mit einer Mehrzahl von Saugnäpfen vor, welche einem ersten und zweiten Vakuumkreis zugeordnet sind und verwendet werden um Werkstücke aus einem Behälter zu greifen und zu transportieren. Der Greiferkopf in US 2015/0147141 A1 umfasst dabei eine oder mehrere Reihen von Saugnäpfen, welche gemeinsam einem ersten gemeinsamen Vakuumkreis zugeordnet sind, und eine zweite Reihe von Saugnäpfen, welche einem zweiten Vakuumkreis zugeordnet sind. Der zweite Vakuumkreis kann dabei gezielt angesteuert werden um nur an den erforderlichen Saugnäpfen des zweiten Vakuumkreises effektiv ein Vakuum zu erzeugen. Eine derartige Anordnung bietet jedoch bei größeren Bauteilen, zu deren Transport eine Mehrzahl von Saugnäpfen gleichzeitig erforderlich sind, keinen Vorteil. Zudem erfolgt lediglich bei der Aufnahme eine Kontrolle mittels Drucksensoren an jedem Saugnapf ob ein ausreichend großer Unterdruck aufgebaut werden kann, welches bei einem falsch eingelegten oder fehlenden Bauteil nicht möglich ist. Die EP 3 251 996 A1 offenbart ein Verfahren zum Transport von plattenförmigen Bauteilen umfassend die Verfahrensschritte: Bereitstellen eines automatisierten Vakuumgreifers, der Vakuumgreifer umfassend eine Mehrzahl von Saugern, welche an einem Tragteil angeordnet sind, ein erster Vakuumerzeuger zur Ausbildung eines ersten Vakuumkreises, ein zweiter Vakuumerzeuger zur Ausbildung eines zweiten Vakuumkreises, zumindest ein mit einer Anlagensteuerung verbundenes Schaltelement zum automatisierten Umschalten des ersten Vakuumkreises auf den zweiten Vakuumkreis, zumindest eine Sensorvorrichtung, wobei der erste Vakuumerzeuger einer ersten vorgebbaren Gruppe von Saugern zugeordnet ist und der zweite Vakuumerzeuger zur Ausbildung eines im Notfall aktivierbaren, zum ersten Vakuumkreis redundanten, zweiten Vakuumkreises mit einem Vakuumtank verbunden ist und dass zumindest eine erste Sensorvorrichtung zur Überwachung des Vakuums am zumindest ersten Vakuumkreis ausgebildet ist; Aufgreifen eines Bauteils mittels dem Vakuumgreifer durch Ausbildung eines Vakuums an zumindest einem Sauger und einer Oberfläche des Bauteils wodurch der erste Vakuumkreis gebildet wird; fortlaufende Überwachung des Vakuums des ersten Vakuumkreises mittels der zumindest einen ersten Sensorvorrichtung; und Transport des Bauteils zu einem vorgebbaren Bestimmungsort, wobei im Falle eines Druckanstiegs im ersten Vakuumkreis die Auslösung eines Alarms in der Anlagensteuerung erfolgt.

Ebenso sind dem Fachmann eine Reihe von Vorrichtungen zum Aufgreifen, zeitweiligen Fixieren und Transport von Bauteilen mit unterschiedlicher Größe bekannt, wobei nur jene Saugnäpfe eines Greiferkopfs aktiv, also vakuumbeaufschlagt, werden welche zur Form des Bauteils korrespondieren. Stellvertretend sei hier die EP 0657673 B1 genannt, in welcher ein Greiferkopf mit einer Mehrzahl von Saugnäpfen vorgestellt wird, wobei die Saugnäpfe in einzelne, bedarfsmäßig ansteuerbare Gruppen zusammengefasst sind. Die EP 0657673 B1 offenbart hierbei eine Gruppe von fixen und zwei Gruppen von höhenverstellbaren Saugnäpfen, wobei die höhenverstellbaren Saugnäpfe abhängig von der ermittelten Größe eines Bauteils aktiv oder bei Bedarf funktionslos geschalten werden können. Die fixen und höhenverstellbaren Gruppen sind unterschiedlichen, allerdings gemeinsamen Vakuumkreisen mit separaten Leitungen zu einer gemeinsamen Pumpe zugeordnet. Durch die Anordnung der unterschiedlichen Saugnäpfe in Gruppen bzw. Vakuumkreise kann zwar die "Form" eines ebenen Bauteils bedarfsgemäß durch Ansteuerung der Saugnäpfe nachempfunden werden, allerdings kann ein lokales Versagen oder eine undichte Stelle an einem Saugnapf immer noch beim Transport des Bauteils zu einem Verrutschen oder sogar Verlust des Bauteils führen.

Eine weitere Herausforderung für sichere Vakuumgreifer stellen die zunehmenden Bearbeitungsgeschwindigkeiten dar, welche eine ebenfalls zunehmende Transport- und Positioniergeschwindigkeit erforderlich machen. Die Fliehkräfte auf die gehaltenen Bauteile steigen dadurch ebenso an, wodurch es bei einer fehlerhaften Kontaktierung des Vakuumgreifers zu einem Verlust des Bauteils kommen kann. Im Falle von oftmals scharfkantigen Blechteilen kann ein derartiger Bauteilverlust zu einer unkontrollierten Bewegung im Bearbeitungsbereich kommen. Bislang wurden zum Schutz der Mitarbeiter und/oder benachbarter Anlagen Schutzzäune verwendet, welche den Bearbeitungsbereich begrenzen. Schutzzäune sind jedoch eine verhältnismäßig starre Begrenzung und teuer in der Errichtung. Zudem ist ein Versetzen der Bearbeitungsanlage an einen anderen Platz in einer Fertigungshalle sehr aufwändig, da eine Demontage der Schutzzäune, sowie deren Montage und Einrichtung sämtlicher Sicherheitsvorkehrungen erforderlich ist.

Aufgabe der vorliegenden Erfindung war es, die Nachteile des Standes der Technik zu überwinden und eine Vorrichtung und ein Verfahren zur Verfügung zu stellen, mittels derer ein Bauteil durch Anlegen eines Vakuums einfach und sicher ergriffen und transportiert werden kann. Überdies ist es eine Aufgabe der Erfindung eine zusätzliche Überwachung einer etwaigen Bauteilbewegung während des Transports bereitzustellen und geeignete Gegenmaßnahmen im Falle einer Relativbewegung des Bauteils gegenüber dem Vakuumgreifer einzuleiten. Ferner ist es eine Aufgabe der Erfindung auf die Errichtung von Schutzzäunen zukünftig verzichten zu können.

Diese Aufgabe wird durch ein Verfahren gemäß Anspruch 1 gelöst.

Der automatisierte Vakuumgreifer, welcher im erfindungsgemäßen Verfahren genutzt wird, umfasst eine Mehrzahl von Saugern, welche an einem vorzugsweise beweglichen Tragteil angeordnet sind. Der Vakuumgreifer umfasst weiters zumindest einem ersten Vakuumerzeuger zur Ausbildung eines ersten Vakuumkreises, zwischen zumindest einem Sauger und dem zu ergreifenden Bauteil, einen zweiter Vakuumerzeuger zur Ausbildung eines zweiten Vakuumkreises und zumindest ein mit einer Anlagensteuerung verbundenes Schaltelement zum automatisierten Umschalten des ersten Vakuumkreises auf den zweiten Vakuumkreis. Überdies weist der Vakuumgreifer zumindest eine mit zumindest dem ersten und zweiten Vakuumerzeuger verbundene Druckluftversorgung, sowie zumindest eine erste und zweite Sensorvorrichtung auf. Der erste Vakuumerzeuger ist einer ersten vorgebbaren Gruppe von Saugern zugeordnet und der zweite Vakuumerzeuger ist zur Ausbildung eines im Notfall bzw. bei Alarm aktivierbaren, zum ersten Vakuumkreis redundanten, zweiten Vakuumkreises mit einem Vakuumtank verbunden. Die zumindest eine erste Sensorvorrichtung ist zur Überwachung des Vakuums am zumindest ersten Vakuumkreis ausgebildet. Der Vakuumgreifer weist zudem zumindest eine zweite Sensorvorrichtung in Form eines optischen Sensors zur Erfassung einer Relativbewegung des Bauteils während eines Transportvorgangs auf. Die Sauger bzw. Saugnäpfe umfassen dabei eine dem zu ergreifenden Blechteil zugewandte Dichtung, Manschetten oder ähnliche flexible Endstücke wie sie dem Fachmann bekannt sind und können direkt oder mit einer Halterung am Tragteil befestigt sein. Die Sauger sind bevorzugt separat von der Anlagensteuerung ansteuerbar ausgebildet und können bevorzugt jeweils ein Ventil oder vergleichbare, von der Anlagensteuerung regelbare, Vakuumschalter aufweisen. Die Sauger stellen somit eine Schnittstelle zwischen Vakuum-System und dem zu bewegenden Bauteil dar.

Im Kontext der vorliegenden Erfindung wird von einem Vakuum gesprochen, wenn der Unterdruck an zumindest einem Sauger unter atmosphärischen Druck abgesenkt wird, wobei bei ausreichend niedrigem Vakuum die Anhebung bzw. Bewegung des Bauteils ermöglicht wird. Die Kraft für die Bewegung des Bauteils wird bevorzugt von einem mehrachsig beweglichen Roboter oder Manipulator über einen Tragarm auf das Tragteil mit den Saugern übertragen. Die Vakuumerzeuger können als elektrische und/oder pneumatische Vorrichtungen zur Erzeugung eines Unterdrucks bzw. Vakuums im Vakuum-System verstanden werden, wobei die Vakuumerzeuger bevorzugt als Vakuumejektoren ausgebildet sind. Derartige Vakuumerzeuger arbeiten nach dem Venturi-Prinzip, wobei Druckluft aus der Druckluftversorgung in einen Vakuumejektor eingeleitet wird und durch Beschleunigung in einer Venturidüse der dynamische Druck steigt, wobei der statische Druck der Luft abnimmt und Luft an einem Vakuumanschluss in den Vakuumejektor gesaugt wird. Der entstehende Unterdruck am Vakuumanschluss kann über ein Leitungsnetz an eine oder mehrere Sauger verteilt werden, wodurch ein erster Vakuumkreis ausgebildet wird. Derartige Vakuumerzeuger und geeignete Leitungsnetze sind dem Fachmann weitestgehend bekannt und bedürfen deshalb an dieser Stelle keiner weiteren Erläuterung.

Es wird jedoch ein zweiter Vakuumkreis vorgesehen, welcher nur im Ausnahmezustand von der Anlagensteuerung über ein dafür vorgesehenes Schaltelement aktiviert wird. Dieser zweite Vakuumkreis ist zum ersten Vakuumkreis als redundanter Vakuumkreis ausgebildet und weist einen eigenen Vakuumtank auf. Der Vakuumtank kann durch einen zweiten Vakuumerzeuger unter Vakuum gesetzt und dieses Vakuum "zwischengespeichert" werden. Im Bedarfsfall kann der Vakuumtank dazu genutzt werden sehr schnell, also im wesentlichen verzögerungsfrei, ein Vakuum an Saugern des ersten und/oder zweiten Vakuumkreises aufzubauen und dieses für einen begrenzten Zeitraum, welcher für Schutz- bzw. Gegenmaßnahmen, aufrechterhalten werden.

Überdies werden zumindest zwei Sensorvorrichtungen am Vakuumgreifer vorgesehen, wobei zumindest eine erste Sensorvorrichtung zur Kontrolle des Unterdrucks bzw. Vakuums im ersten und/oder zweiten Vakuumkreis verwendet wird, wobei zumindest eine zusätzliches zweite Sensorvorrichtung zur Kontrolle und Überwachung einer etwaigen Relativbewegung des zu bewegenden Bauteils verwendet wird.

Die erste Sensorvorrichtung kann dabei in dem Fachmann bekannter Weise als z.B. Druckmesszellen, Drucksensoren oder dergleichen innerhalb des ersten und/oder zweiten Vakuumkreises angeordnet sein. Die zweite Sensorvorrichtung ist dabei als optischer Sensor ausgebildet, welcher grundsätzlich ähnlich dem Prinzip eines "Maussensors" eine zyklische oder kontinuierliche Abtastung der zu ergreifenden Bauteiloberfläche vornimmt.

Der Vakuumgreifer ist somit vortrefflich für den automatisierten Einsatz geeignet, wobei beim erfindungsgemäßen Verfahren zum Transport der Bauteile, insbesondere Blechteile, zumindest die folgenden Verfahrensschritte ausgeübt werden:
- Bereitstellen eines automatisierten Vakuumgreifers, der Vakuumgreifer umfassend eine Mehrzahl von Saugern, welche an einem bevorzugt beweglichen Tragteil angeordnet sind,einen ersten Vakuumerzeuger zur Ausbildung eines ersten Vakuumkreises, einen zweiten Vakuumerzeuger zur Ausbildung eines zweiten Vakuumkreises, zumindest ein mit einer Anlagensteuerung verbundenes Schaltelement zum automatisierten Umschalten des ersten Vakuumkreises auf den zweiten Vakuumkreis, zumindest eine mit zumindest dem ersten und zweiten Vakuumerzeuger verbundene Druckluftversorgung, und zumindest eine erste und zweite Sensorvorrichtung, wobei der erste Vakuumerzeuger einer ersten vorgebbaren Gruppe von Saugern zugeordnet ist und der zweite Vakuumerzeuger zur Ausbildung des im Notfall aktivierbaren, zum ersten Vakuumkreis redundanten, zweiten Vakuumkreises mit einem Vakuumtank verbunden ist und wobei die zumindest eine erste Sensorvorrichtung zur Überwachung des Vakuums zumindest am ersten Vakuumkreis ausgebildet ist und die zumindest eine zweite Sensorvorrichtung einen optischen Sensor zur Erfassung einer Relativbewegung des Bauteils während eines Transportvorgangs aufweist;
- Aufgreifen eines Bauteils mittels Vakuumgreifer durch Ausbildung eines Vakuums an zumindest einem Sauger und einer Oberfläche des Bauteils wodurch ein erster Vakuumkreis gebildet wird;
- Überwachung des Vakuums des ersten Vakuumkreises mittels zumindest einer ersten Sensorvorrichtung;
- Überwachung einer Position des Bauteils relativ zu zumindest einer als optischer Sensor ausgebildeten zweiten Sensorvorrichtung des Vakuumgreifers;
- Transport des Bauteils zu einem vorgebbaren Bestimmungsort, wobei im Falle einer detektieren Relativbewegung des Bauteils die Auslösung eines Alarms in der Anlagensteuerung erfolgt.

Durch die fortlaufende, also zyklische oder kontinuierliche, Überwachung des angelegten Vakuums sowie der Position des Bauteils relativ zu einer oder mehrerer zweiter Sensorvorrichtung/en kann die Sicherheit gegen Bauteilverlust während der Bewegung deutlich reduziert werden. Diese Redundanzüberwachung wird durch den redundanten zweiten Vakuumkreis als Redundanzhalterung ergänzt, wodurch im Falle eines Unterdrucks, also eines unbeabsichtigten Abfalls des Vakuums, ersten Vakuumkreis sofort ein Alarm an die Anlagensteuerung gesendet wird. Die Anlagensteuerung sorgt sogleich für die Umschaltung vom ersten auf den zweiten Vakuumkreis, wodurch ein, zumindest kurzfristig wirksames Vakuum in den Saugern des ersten und/oder zweiten Vakuumkreises aktiviert werden kann.

Auf diese Weise kann eine sichere Erkennung von mangelhaft kontaktierten Bauteilen erfolgen. Die erforderlichen baulichen Maßnahmen sind relativ kostengünstig umsetzbar und vergleichsweise einfach in eine Anlagensteuerung zu implementieren. Durch den Vakuumtank wird ein schnell "zugängliches" Vakuum bereitgestellt, welches einen Bauteilverlust verhindern kann. Mit dem vorgestellten automatisierten Vakuumgreifer bzw. dem erfindungsgemäßen Verfahren kann die Ausbildung eines den Bearbeitungsbereich begrenzenden Schutzzauns vermieden werden. Neben geringeren Kosten kann eine höhere Flexibilität des Bearbeitungszentrums, in welchem der Vakuumgreifer eingesetzt wird, erreicht werden.

Der Vakuumgreifer kann zudem derart ausgebildet sein, dass die Sauger mittels Druckluft aktiv beaufschlagt werden können, wodurch eine Ablage des Bauteils durch Unterbrechung des ersten und/oder zweiten Vakuumkreises beschleunigt werden kann. Somit ist es auch möglich ein Abblasen von gehaltenen Bauteilen durch die Druckluftversorgung an den einzelnen Saugern vorzunehmen. Vom Fachmann sind dazu geeignete Ventilen und/oder Schaltern zur Trennung der Druckluftversorgung vom ersten und/oder zweiten Vakuumkreis für ein Abblasen vorzusehen und müssen an dieser Stelle nicht weiter erörtert werden.

Es kann darüber hinaus vorgesehen sein, dass im Falle einer detektierten Relativbewegung des Bauteils und/oder einer unbeabsichtigten Unterbrechung des ersten Vakuumkreises ein zweiter, zum ersten Vakuumkreis redundanter, Vakuumkreis aktiviert wird, wobei ein Vakuumtank zur kurzzeitigen Versorgung des zweiten Vakuumkreises verwendet wird.

Des Weiteren kann es zweckmäßig sein, wenn der zweite Vakuumerzeuger und der Vakuumtank am Tragteil angeordnet ist, wobei der Tragteil an einem, bevorzugt mehrachsig, beweglichen Tragarm des Vakuumgreifers angeordnet ist.

Diese Ausführungsform erlaubt aufgrund der sehr kurz ausführbaren Leitungswege vom Vakuumtank zu den einzelnen Saugern ein sehr schnelles Ansprechen im Notfall bzw. bei Auslösen eines Alarms. Der Vakuumtank kann dabei direkt am Tragteil oder auch auf einer dafür vorgesehenen Halterung montiert sein. Überdies wird die Beweglichkeit des Tragteils durch den Vakuumtank nicht wesentlich eingeschränkt und somit die Sicherheit im Betrieb erhöht.

Ferner kann vorgesehen sein, dass ein Volumen des Vakuumtanks größer als ein Summenvolumen von zumindest der ersten vorgebbaren Gruppe von Saugern ausgebildet ist.

Die erste Gruppe von Sauger sind jene Sauger welche zum Transport des Bauteils zumindest erforderlich sind. Die Summe der Volumina dieser Sauger und etwaiger Leitungen vom Vakuumerzeuger zu den Saugern sollte im Bedarfsfall geringer sein, als die Kapazität, also das zur Verfügung stehende Vakuum des Vakuumtanks. Dies kann auf relativ einfache Weise durch den Fachmann bei der Auslegung entsprechend des genannten Summenvolumens vorgesehen werden und ermöglicht ein sicheres "Nachgreifen" des redundanten zweiten Vakuumkreises.

Darüber hinaus kann vorgesehen sein, dass der zumindest eine optische Sensor eine Lichtquelle umfasst, welche als eine Leuchtdiode oder eine Laserdiode mit einer vorgebbaren Wellenlänge oder einem vorgebbaren Wellenlängenbereich ausgebildet ist.

Da es bei Oberflächen von Bauteilen, insbesondere Blechteilen, zu unerwünschten Reflexionen kommen kann hat sich diese Maßnahme als besonders wirkungsvoll erwiesen um den optischen Sensor in einem Wellenlängenbereich zu betreiben, welcher eine sichere Arbeitsweise ermöglicht. Gerade bei hochreflektierenden Oberflächen von Blechen im roten Wellenlängenbereich kann beispielsweise ein Wellenlängenbereich im grünen, blauen, oder auch UV-Bereich, zu einer verbesserten Erkennung von Relativbewegungen genutzt werden. Ebenso kann eine geeignete Wahl des Wellenlängenbereichs einen etwaigen Streulicht- oder Umgebungslichteinfluss verringern, wodurch die Sicherheit im Betrieb erhöht werden kann. In Abhängigkeit von der zu erwartenden Oberfläche einer Bauteilserie ist es möglich in der Anlagensteuerung geeignete Reflexionsspektren zu hinterlegen und/oder die Wellenlänge bzw. Wellenlängenspektren des optischen Sensors, z.B. durch Wahl einer geeigneten Lichtquelle vorzugeben.

Durch z.B. LEDs oder Laserdioden, lassen sich mehrere von der Anlagensteuerung auswählbare Lichtquellen unterschiedlicher Wellenlänge oder -bereiche in einem optischen Sensor platzsparend und effizient anordnen.

Vorteilhaft ist auch eine Ausprägung, gemäß welcher vorgesehen sein kann, dass der zumindest eine optische Sensor am Tragteil und/oder innerhalb eines Saugers angeordnet ist.

Obwohl eine Beabstandung des optischen Sensors von einigen Zentimetern möglich ist, hat sich die Anordnung in unmittelbarer Nähe zur Oberfläche des zu bewegenden Bauteils als besonders vorteilhaft erwiesen. Eine Anordnung innerhalb eines Saugers oder auch mehrerer Sensoren in mehreren unterschiedlichen Saugern kann zudem den Vorteil bieten, dass eine unbeabsichtigte Berührung oder auch Beschädigung des optischen Sensors vermieden wird. Zudem kann eine derartige Anordnung den Einfluss von Umgebungslicht durch die Abschottung durch den Sauger bzw. eine Dichtung signifikant verringern.

Gemäß einer Weiterbildung ist es möglich, dass zumindest zwei zweite optische Sensorvorrichtungen am Tragteil an oder innerhalb unterschiedlicher Sauger angeordnet sind.

Entsprechend der Grundidee der Erfindung kann bereits mittels einer zweiten Sensorvorrichtung eine unerwünschte Relativbewegung des Bauteils erfasst werden und geeignete Gegenmaßnahmen von der Anlagensteuerung veranlasst werden. Es hat sich jedoch als besonders vorteilhaft erwiesen, wenn ein zweiter oder auch mehrere zweite Sensorvorrichtungen am Tragteil oder innerhalb mehrerer Sauger vorgesehen sind. Zum Einen kann auf diese Weise die Funktionalität des Vakuumgreifers auch bei unterschiedlich großen Bauteilen sichergestellt werden. Zum Anderen ist es möglich, dass bei Detektion einer Relativbewegung durch zwei von einander unabhängigen zweiten Sensorvorrichtungen eine Berechnung der Geschwindigkeit und/oder Beschleunigung des Bauteils von der Anlagensteuerung vorgenommen wird. Hierdurch kann eine Flugbahn und/oder ein wahrscheinlicher Auftreffpunkt des Bauteils bei Bauteilverlust präziser berechnet werden, wodurch die Sicherheit und die Einleitung erforderlicher Gegenmaßnahmen von der Anlagensteuerung gezielter eingeleitet werden können.

Zudem ist es denkbar, dass bei Verwendung mehrere optischer Sensoren die jeweiligen Sensoren unterschiedliche Wellenlängen oder -bereiche verwenden, wodurch ein vereinfachter Aufbau der optischen Sensoren erreicht werden kann und trotzdem eine sichere Erkennung unterschiedlich reflektierender Oberflächen bzw. einer Relativbewegung dieser sichergestellt bleibt.

Das Vakuum-System des Vakuumgreifers kann gemeinsame oder auch getrennte Leitungen zwischen dem ersten Vakuumerzeuger und den, dem ersten Vakuumkreis zugeordneten, Saugern sowie separate Leitungen zwischen dem zweiten Vakuumerzeuger und dem Vakuumtank sowie den, dem zweiten Vakuumkreis zugeordneten Saugern umfassen.

Es kann dabei zweckmäßig sein, wenn der zweite Vakuumkreis an separaten, eine zweite Gruppe bildenden und zur ersten Gruppe zusätzlichen, Saugern ausgebildet ist.

Diese Ausführungsform kann derart verstanden werden, dass die Sauger beispielsweise in Form eines "Arrays" angeordnet sind und in eine erste und/oder zweite Richtung nur eine Anzahl von Saugern der ersten Gruppe, also dem ersten Vakuumkreis, zugeordnet sind. Das Bauteil kann somit sicher von den Saugern des ersten Vakuumkreises gegriffen werden, wobei die Sauger der zweiten Gruppe nicht aktiv an Positionen des "Arrays" angeordnet sind, welche im Wesentlichen den Zwischenpositionen der ersten Gruppe von Saugern entsprechen. Dabei sind durch das Ansaugen der ersten Gruppe von Saugern auch die Sauger der zweiten Gruppe von Saugern in Kontakt mit der zumindest Teilen der Oberfläche des Bauteils, ohne dass jedoch aktiv ein Vakuum an den zweiten Vakuumkreis angelegt wird. Im Falle eines Alarms wie zuvor beschrieben, können die Sauger der zweiten Gruppe, also des zweiten Vakuumkreises aktiviert werden und sind "sofort" einsatzbereit. Durch die getrennten Leitungen der ersten und zweiten Gruppe, also des ersten und zweiten Vakuumkreises, kann eine Leckage am Leitungsnetz der ersten Gruppe als Einflussgröße für einen möglichen Bauteilverlust weitestgehend eliminiert werden, da der zweite Vakuumkreis im Wesentlichen vollständig redundant und eigenständig ausgebildet zum Einsatz bereitgestellt ist.

Darüber hinaus kann vorgesehen sein, dass der zweite Vakuumkreis mit dem ersten Vakuumkreis, bevorzugt über ein gemeinsames Leitungsnetz, verbunden ist.

Diese alternative Ausführungsform ermöglicht eine sehr kostengünstige Ausbildung des Leitungsnetzes, wobei die Sauger an den ersten und zweiten Vakuumkreis angeschlossen sind und nur der erste Vakuumkreis aktiv ist. Im Falle eines Alarms kann das zuvor beschriebene Umschalten auf den zweiten Vakuumkreis erfolgen und die Sicherheit gewährleistet werden. Diese Ausführungsform kann insbesondere bei einer geringen Anzahl von verwendeten Saugern oder auch bei kleinflächigen Bauteilabmessungen und dementsprechend platzsparend ausgebildetem Vakuumgreifer von Vorteil sein. Überdies kann auf diese Weise Gewicht durch die Einsparung von separaten Saugern und/oder Leitungen des zweiten Vakuumkreises reduziert werden, wodurch höhere Beschleunigungen des Vakuumgreifers beim Transport des Bauteils erzielbar werden.

Des Weiteren kann vorgesehen sein, dass zumindest zwei der Sauger relativ zum Tragteil schwenkbar und/oder höhenverstellbar am Tragteil angeordnet sind.

Diese Maßnahme kann vorteilhaft dazu genutzt werden, insbesondere bei großflächigen Bauteilen, einen etwaigen Verzug des Bauteils zu kompensieren. Ein derartiger Verzug kann eine Abweichung von einzelnen Bereichen der Oberfläche des Bauteils sein, wobei eine ideale ebene Fläche des Bauteils als "Ansaugebene" bezeichnet wird. Die Sauger können hierzu in einem geringen Winkelbereich von 5° bis etwa 15° relativ zur Ansaugebene auslenkbar am Tragteil befestigt sein. Den gleichen Effekt können auch höhenverstellbare Sauger aufweisen, welche normal zur Ansaugebene auslenkbar sind. Derartig bewegliche Sauger können passiv, also durch das Kontaktieren mittels Tragarm, auslenkbar oder auch durch geeignete Stellmotoren aktiv auslenkbar am Tragteil angeordnet sein.

Gemäß einer besonderen Ausprägung ist es möglich, dass zumindest ein Sauger relativ zu, bevorzugt zumindest in Richtung, der Ansaugebene verstellbar, bevorzugt an einem dafür vorgesehenen Halteelement, am Tragteil angeordnet ist.

Durch diese Maßnahme können die Sauger aktiv in Richtung der Ansaugebene relativ zu einer gedachten Längsachse des Tragteils verstellt werden. Auf diese Weise kann vermieden werden, dass die Sauger bei Bauteilen, welche Ausnehmungen aufweisen in diese "ein-" oder sogar "durchgreifen". Durch Verstellung der Sauger bzw. eines dafür vorgesehenen Halteelements kann somit eine sichere Kontaktierung von Bauteilen mit Öffnungen und/oder Ausnehmungen gezielt vorgenommen werden. Es kann vorgesehen sein, dass in der Anlagensteuerung die Bauteilgeometrie hinterlegt ist, wodurch die Ansteuerung der verstellbaren Sauger bzw. etwaiger Haltelemente automatisiert erfolgen kann. Die Verstellung der verstellbaren Sauger kann über geeignete Stellmotoren oder auch Schieber und dergleichen vorgenommen werden, wie sie dem Fachmann durchwegs bekannt sind.

Entsprechend einer vorteilhaften Weiterbildung kann vorgesehen sein, dass das Tragteil relativ zu einer Ansaugebene zumindest ein schwenk- oder rotierbares Tragteilelement aufweist.

Eine derartige Maßnahme kann die Versatilität des automatisierten Vakuumgreifers für unterschiedliche Bauteilgrößen deutlich erhöhen. Das zumindest eine Tragteilelement kann seitlich am Tragteil angeordnet sein und bei Bedarf, also im Falle einer größeren Anzahl erforderlicher Sauger bei größeren Bauteilabmessungen, einfach "heruntergeklappt" werden. Die Tragteilelemente können somit zusätzliche Sauger aufweisen, wobei die zuvor genannten Zuordnungen und/oder Ansteuerung der einzelnen Sauger zu einem ersten und/oder zweiten Vakuumkreis auch hier gelten. Einhergehend können die an den Tragteilelementen angeordneten Sauger in separat ansteuerbare zusätzliche Gruppen unterteilt werden, um eine einfache Ansteuerung zu ermöglichen. Ebenso können die Tragteilelemente bevorzugt über mechanische und/oder pneumatische Antriebe mit dem Tragteil verbunden sein, wodurch ein automatisierter Betrieb begünstigt wird.

Insbesondere kann es vorteilhaft sein, wenn eine akustische und/oder optische Warneinrichtung am Tragteil und/oder einem Gehäuse des Vakuumgreifers und/oder einer Bearbeitungsmaschine angeordnet und mit der Anlagensteuerung verbunden ist. Bei Auslösung eines Alarms in der Anlagensteuerung kann diese akustische und/oder optische Warneinrichtung aktiviert werden.

Auf diese Weise kann ein Bediener optisch und/oder akustisch vom Vorliegen eines Ausnahmezustands informiert werden. Die optische Warneinrichtung kann in Form von Signalleuchten z.B. an der Bearbeitungsmaschine oder auch am Vakuumgreifer angebracht sein. Es ist auch denkbar, dass die optische Warneinrichtung in Form von LEDs oder dergleichen an den einzelnen Saugern angebracht ist um lokal, also am detektierten Versagensort, auf das Vorliegen es nicht ausreichend ausgebildeten Vakuums hinzuweisen. Dies begünstigt eine schnelle Fehlerbebung. Ferner kann die optische Warneinrichtung auch eine zusätzliche Darstellung des Alarms auf einem Monitor der Anlagensteuerung umfassen.

Darüber hinaus kann vorgesehen sein, dass eine optische Umgebungsüberwachung, insbesondere Lichtschranken und/oder -zäune, mit der Anlagensteuerung verbunden ist.

Eine optische Umgebungsüberwachung kann ein dreidimensionales Erfassungssystem für Bewegungen in einem vorgebbaren Bearbeitungsbereich oder auch Bewegungsbereich des Vakuumgreifers sein. Derartige Systeme können eigenständig oder auch ergänzend zu Lichtschranken und/oder Lichtzäunen verwendet werden, welchen den Bearbeitungs- oder Bewegungsbereich "begrenzen". Der erfindungsgemäß ausgebildete Vakuumgreifer erlaubt somit den Verzicht auf mechanische Absperrungen eines Bearbeitungsbereichs, ohne dabei Einbußen der Sicherheit für einen Bediener hinnehmen zu müssen. Der zu überwachende Bearbeitungs- oder Bewegungsbereich kann in der Anlagensteuerung hinterlegt sein und dient dazu eine nicht von der Anlagensteuerung vorhergesehene Bewegung zu detektieren.

Es ist dabei vorteilhaft, wenn im Falle einer detektierten Bewegung innerhalb eines Bearbeitungsbereichs und/oder des Bewegungsbereichs des Vakuumgreifers durch eine mit der Anlagensteuerung verbundenen Umgebungsüberwachung ein Alarm in der Anlagensteuerung ausgelöst wird.

Bei Auslösung des Alarms können geeignete Gegenmaßnahmen von der Anlagensteuerung veranlasst werden.

Ferner kann es zweckmäßig sein, wenn bei Auslösung eines Alarms eine kontrollierte Reduktion einer Bewegungsgeschwindigkeit eines Tragarms des Vakuumgreifers und/oder eine Absenkung des transportierten Bauteils in Vertikalrichtung nach unten vorgenommen wird.

Diese Maßnahmen können als zusätzliche Gegenmaßnahmen verstanden werden, wobei das Erhöhen der Ansaugleistung an das Bauteil durch Aktivierung des zweiten Vakuumkreises die erste wirksame Gegenmaßnahme darstellt. Die Reduktion der Bewegungsgeschwindigkeit des Tragarms bewirkt eine Reduktion der Fliehkraft und/oder Schwerkraft auf das Bauteil, wodurch ein Bauteilverlust bei Verlust des Vakuums kontrolliert oder sogar vermieden werden kann. Die Reduktion der Bewegungsgeschwindigkeit kann bis hin zum kontrollierten Stillstand des Vakuumgreifers vorgenommen werden. Ebenso kann die Absenkung des Tragteils bzw. des Tragarms dazu genutzt werden das Bauteil im Falle eines Verlusts in Richtung Boden zu lenken, wodurch die Sicherheit erhöht wird.

Zum besseren Verständnis der Erfindung wird diese anhand der nachfolgenden Figuren näher erläutert.

Es zeigen jeweils in stark vereinfachter, schematischer Darstellung:
- Fig. 1: schematische Darstellung einer möglichen Anordnung eines Bearbeitungszentrums;
- Fig. 2: schematische Darstellung einer möglichen Ausführungsform eines Vakuumgreifers;
- Fig. 3: schematische Darstellung des Verschaltungs-/Funktionsprinzips des ersten und zweiten Vakuumkreises, welche unterschiedlichen Saugern (a) oder gleichen Saugern (b) zugeordnet sind;
- Fig. 4: mögliche Ausführungsform eines Vakuumgreifers mit Tragteil mit verstellbaren Saugern;
- Fig. 5: mögliche Ausführungsform eines Vakuumgreifers mit Tragteil und Tragteilelementen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

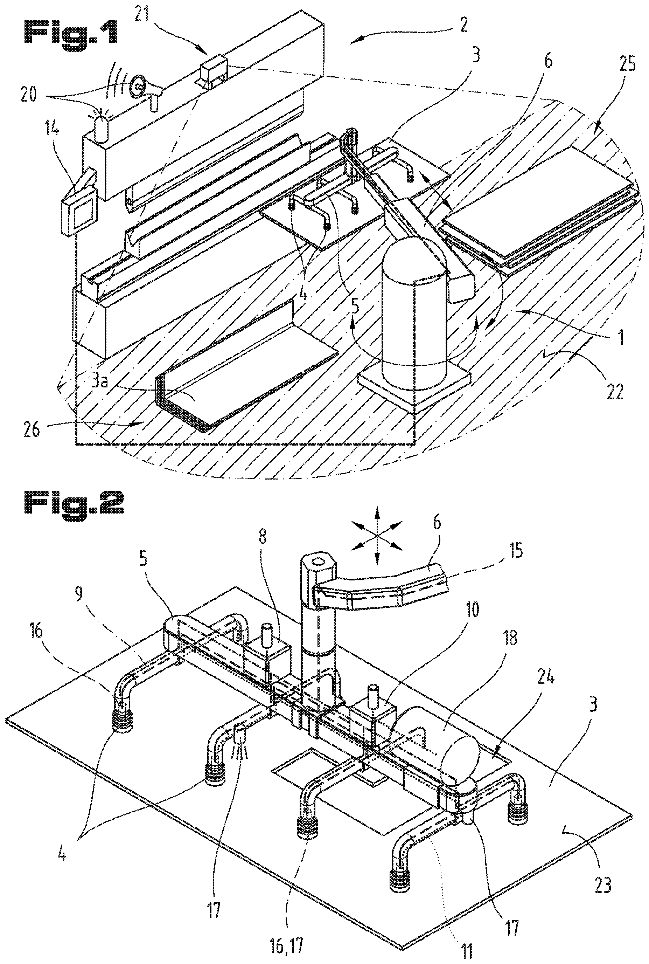

In Fig. 1 ist eine schematische Darstellung eines möglichen Bearbeitungszentrums ersichtlich, worin neben einem einer Bearbeitungsmaschine 2 ein automatisierter Vakuumgreifer 1 ersichtlich ist. Der Vakuumgreifer 1 dient dazu Bauteile 3 von einem Aufnahmeort 25 schnell und sicher zu einer Bearbeitungsmaschine 2 und/oder zu einem Ablageplatz 26 für bearbeitete Bauteile 3a zu transportieren.

Wie aus Fig. 1, insbesondere in Zusammenschau mit Fig. 2 und Fig. 4 und Fig. 5, zu sehen, kann der Vakuumgreifer 1 als mehrachsig beweglicher Manipulator bzw. Roboter ausgebildet sein. Am beweglichen Tragarm 6 ist ein bewegliches Tragteil 5 angeordnet, welches über eine Mehrzahl von Saugern 4 zur Kontaktierung des Bauteils 3 verfügt. Der Bearbeitungsbereich 22 bzw. der Bewegungsbereich des Vakuumgreifers sind der Einfachheit halber gemeinsam mittels einer schraffierten Fläche dargestellt, obwohl dieser Bereich als dreidimensionaler Raum verstanden werden soll. Dieser Bearbeitungsbereich 22 kann von einer Umgebungsüberwachung 21 demnach vorzugsweise dreidimensional überwacht werden, wobei eine Anordnung dieser Umgebungsüberwachung 21 vorzugsweise an einem höhergelegenen Punkt erfolgt, wie z.B. der Bearbeitungsmaschine 2. Alternativ kann eine derartige Umgebungsüberwachung 21 aber auch an einer Hallendecke, oder auch dem Vakuumgreifer 1 selber angeordnet sein. Nicht in Fig. 1 dargestellt, sind dem Fachmann geläufige Lichtschranken oder auch Lichtzäune, welche eigenständig als Umgebungsüberwachung 21 verwendet werden können oder auch in Verbindung mit der zuvor beschriebenen dreidimensionalen Umgebungsüberwachung 21. Eine zusätzliche Unterteilung des Bearbeitungsbereichs 22 in einen Warnbereich und einen weiter innenliegenden Sicherheitsbereich ist ebenso möglich.

In Fig. 1 kann ferner die beispielhafte Anordnung einer Anlagensteuerung 14 an der Bearbeitungsmaschine 2 in Form eines Displays ersehen werden. Die Verbindung zum Vakuumgreifer und etwaiger weiterer Komponenten bzw. Elemente des Bearbeitungszentrums kann kabelgebunden oder auch kabellos über z.B. WiFi oder Bluetooth erfolgen und ist schematisch durch eine strichlierte Linie angedeutet.

Ferner ist in Fig. 1 eine schematische Anordnung von Elementen einer optischen und/oder akustischen Warneinrichtung 20 an der Bearbeitungsmaschine 2 ersichtlich. Zusätzliche oder auch alternative Anordnungen, wie etwa am Vakuumgreifer 1 und insbesondere in Form von optischen Warneinrichtungen 20 am Tragteil sind nicht dargestellt, jedoch für den Fachmann einfach nachvollziehbar.

In Fig. 2 ist eine schematische Darstellung einer möglichen Ausführungsform eines Tragteils 5 mit einer Mehrzahl von daran angeordneten Saugern 4 gezeigt. Wie zuvor erläutert ist das Tragteil 5 beweglich am wiederum beweglichen Tragarm 6 befestigt und eine Druckluftversorgung 15 schematisch angedeutet. Die Druckluftversorgung 15 kann wie durch die strichlierte Linie schematisch dargestellt zur Versorgung des ersten 8 und zweiten Vakuumerzeugers 10 ausgebildet sein. Nicht dargestellt sind die dafür erforderlichen Leitungen. Ebenso ist die Möglichkeit durch die strichlierten Linien angedeutet, die Druckluftversorgung 15 an einzelne oder auch alle Sauger 4 anzuschließen um z.B. eine kontrollierte druckluftunterstützte Unterbrechung des Vakuums an den Saugern 4 gezielt zu unterbrechen oder sogar ein Abblasen des gehaltenen Bauteils 3 zu ermöglichen.

Aus Fig. 2 kann ferner eine mögliche vorteilhafte Anordnung der beiden Vakuumerzeuger 8,10 am Tragteil 5 ersehen werden. Mit dem zweiten Vakuumerzeuger 10 ist ein Vakuumtank 18 verbunden, welcher zur redundanten und schnellen Sicherstellung eines Vakuums im Bedarfsfall dient. Die Ausbildung eines ersten und zweiten Vakuumkreises 9,11 ist nur schematisch durch gepunktete bzw. strich-gepunktete Linien angedeutet, wobei der zweite Vakuumkreis 11 (stricht-gepunktete Linien) mit dem Vakuumtank 18 verbunden sein muss.

Das Bauteil 3, welches in Fig. 2 als vorgebogenes Blechteil mit Ausnehmungen 24 beispielhaft dargestellt ist, wird von den Saugern 4 gehalten welche einer ersten Gruppe 12 von Saugern 4 zugeordnet ist. In der gewählten Ausführungsform soll die Möglichkeit veranschaulicht werden, eine zweite Gruppe 13 von Saugern 4 ebenfalls mit dem Bauteil 3 zu kontaktieren, obwohl beim Normalbetrieb an diesen Saugern 4 kein Vakuum anliegt.

Zudem ist in Fig. 2 die Position von zwei zweiten Sensorvorrichtungen 17 am Tragteil 5 ersichtlich. Diese beispielhafte Anordnung zeigt, dass die als optische Sensoren ausgebildeten zweiten Sensorvorrichtungen 17 eine etwaige Relativbewegung des Bauteils 3 relativ zu den Sensorvorrichtungen 17 und somit auch relativ zum Tragteil 5 relativ einfach detektieren können. Beispielhaft sind auch eine Mehrzahl von ersten Sensorvorrichtungen 16 als strichlierte Elemente angedeutet, welche in Form von Drucksensoren bzw. Druckmesszellen bevorzugt im Leitungsnetz oder auch direkt an den Saugern 4 des ersten und/oder zweiten Vakuumkreises 9,11 angeordnet sein können. Die Überwachung durch die ersten und zweiten Sensorvorrichtungen 16,17 erfolgt fortlaufend von der Aufnahme des Bauteils 3 bis zu einer Ablage innerhalb der Bearbeitungsmaschine 2 oder auch am Ablageplatz 26.

Im Falle einer Unterbrechung oder auch bereits eines vorgebbaren Vakuumverlusts des ersten Vakuumkreises 9 kann die Anlagensteuerung 14 einen Alarm auslösen, welcher zumindest ein nicht dargestelltes Umschaltelement dazu veranlasst den zweiten Vakuumkreis 11 zu aktivieren. Ebenso kann zusätzlich oder auch eigenständig der Alarm ausgelöst werden, wenn eine Relativbewegung des Bauteils 3 von der zumindest einen zweiten Sensorvorrichtung 17 detektiert wird.

Aus Fig. 2 ist besonders gut ersichtlich, dass die räumliche Nähe des Vakuumtanks 18 zum Anlegen eines Vakuums im Bedarfsfall am zweiten Vakuumkreis 11 aufgrund der kurzen Leitungswege begünstigt. Ebenso kann anhand von Fig. 2 insbesondere in Zusammenschau mit Fig. 1 erkannt werden, dass bei Auslösen eines Alarms das Bauteil 3 mittels Tragteil 5 bzw. Tragarm 6 in der Bewegung verlangsamt und/oder in Vertikalrichtung nach unten abgesenkt werden kann um im Falle eines Verlust des Bauteils Schaden für Bediener und/oder Anlagen zu vermeiden.

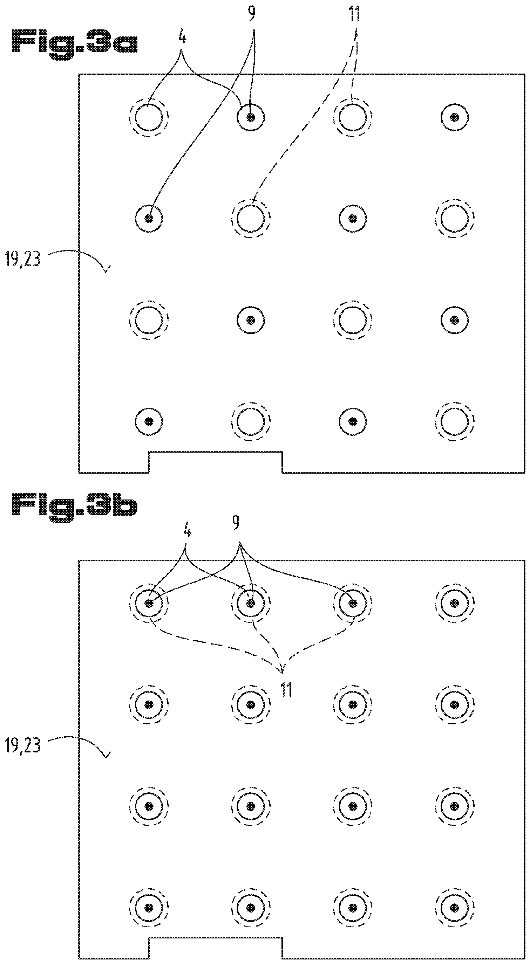

Fig. 3 dient der Veranschaulichung des Verschaltungsprinzips der redundanten Ausführung des zweiten Vakuumkreises 11. In Fig. 3a und Fig. 3b sind beispielhafte Darstellungen von möglichen Anschlussmustern einer Mehrzahl von arrayartig angeordneten Saugern 4 in einen ersten und zweiten Vakuumkreis 9,11 gezeigt. Die Sauger 4 welche dem ersten Vakuumkreis 9 bzw. der ersten Gruppe 12 von Saugern 4 zugeordnet sind, sind durch einen Punkt innerhalb des Saugers 4 gekennzeichnet. Jene Sauger 4, welche der zweiten Gruppe 13 und/oder dem zweiten Vakuumkreis 11 zugeordnet sind, sind durch einen zweiten strichtlierten Ring um den jeweiligen Sauger 4 gekennzeichnet. Die Sauger 4 sind in einer Aufsicht ohne ein Tragteil 5 oder Vakuumerzeuger 8,10 lediglich schematisch angedeutet, wobei in der Bildebene ein Bauteil 3 ersichtlich ist, dessen Oberfläche 23 als eine ideale ebene Fläche als Ansaugebene 19 für die Sauger 4 dient.

In Fig. 3a wird dabei die Möglichkeit gezeigt eine erste Gruppe 12 von Saugern 4 in einem ersten Vakuumkreis 9 zusammenzufassen. Die dargestellte Anordnung jeden zweiten Sauger 4 dem ersten Vakuumkreis 9 zuzuordnen spiegelt nur eine von vielen möglichen Anordnungen wider. Die erste Gruppe 12 von Saugern 4 dient primär der Aufnahme und des Transport eines Bauteils 3, während aus der Draufsicht erkennbar ist, dass die zweite Gruppe 13 von Saugern 4 zwar mit dem Bauteil 3 an der Ansaugebene 19 in Kontakt stehen, jedoch im Normalbetrieb nicht aktiv sind. Im Falle eines Alarms, wird wie zuvor beschrieben der zweite Vakuumkreis 11 aktiviert und das Bauteil 3 kann zumindest kurzzeitig gehalten werden. Nicht dargestellt sind die Leitungen bzw. das Leitungsnetz, welches jeweils zur getrennten Versorgung des ersten und zweiten Vakuumkreises 9,11 in Fig. 3a erforderlich sind.

In Fig. 3b wird eine mögliche Alternative Anordnung bzw. Verschaltung mittels einem gemeinsam für den ersten und zweiten Vakuumkreis 9,11 verwendbaren Leitungsnetz angedeutet. Somit kann die erste Gruppe 12 von Saugern 4 gleichzeitig dem ersten und zweiten Vakuumkreis 9,11 zugeordnet sein, wobei im Normalbetrieb nur der erste Vakuumkreis 9, also die Vakuumversorgung mittels des ersten Vakuumerzeugers 8, aktiv ist. Im Notfall bzw. bei einem Alarm kann das Leitungsnetz des ersten Vakuumkreises 9 durch Zu- bzw. Umschalten auf den zweiten Vakuumkreis 11 genutzt werden, wobei das Vakuum an den Saugern 4 durch den Vakuumtank 18 zumindest kurzzeitig aufrechterhalten werden kann.

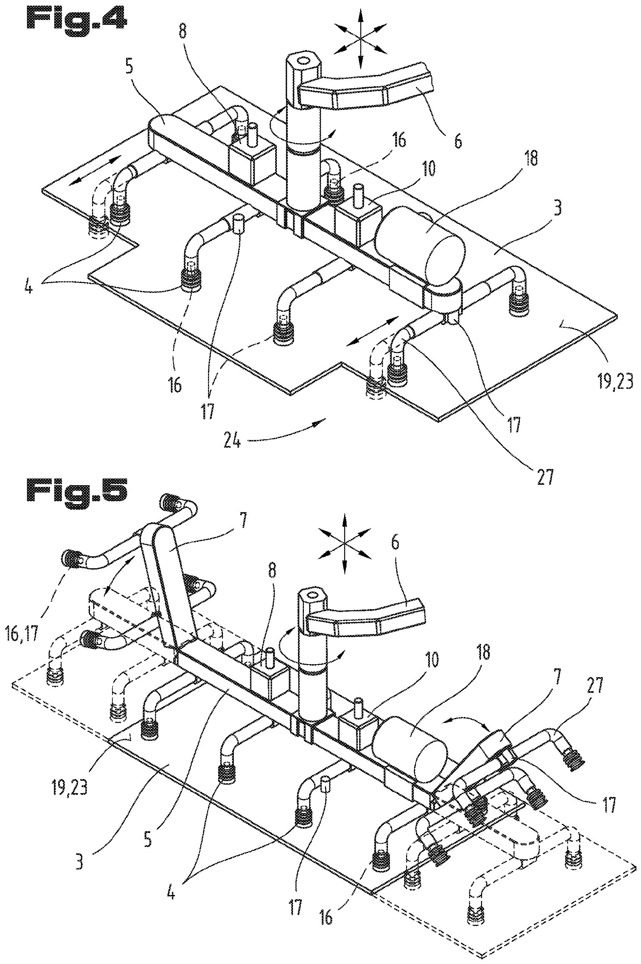

Eine mögliche Ausführungsform für einen Vakuumgreifer 1 mit einem Tragteil 5, welches verstellbare Sauger 4 aufweist, ist beispielhaft in Fig. 4 skizziert. Es können hierbei eine Mehrzahl von Saugern 4 gesehen werden, welche in zumindest eine Richtung der Ansaugebene 19, also im Wesentlichen parallel zu einer zu kontaktierenden Oberfläche 23 des Bauteils, verstellbar sind. Strichliert dargestellt wären Positionen, in denen die Sauger 4 in eine Ausnehmung 24 oder eine Öffnung des Bauteils 3 greifen würden, weshalb in der gewählten Darstellung die Sauger 4 derart verstellt sind, dass ein Kontakt aller Sauger 4 am Bauteil 3 vorliegt. Die Sauger 4 können entweder separat verstellbar ausgebildet sein, oder wie in der beispielhaften Darstellung mittels verstellbaren Halteelementen 27. Die Verstellung der Sauger 4 und/oder der Halteelemente 27 kann mittels nicht näher dargestellter elektrischer und/oder pneumatischer Antriebe realisiert und von der Anlagensteuerung 14 angesteuert werden.

Es ist ferner möglich, dass die Sauger 4 relativ zum Tragteil 5 und/oder einem Halteelement 27 höhenverstellbar und/oder schwenkbar befestigt sind. Auf eine Darstellung einer solchen Ausführungsform wird verzichtet, da für den Fachmann die Lehre ausreichend sein sollte, dass durch diese Maßnahme Unebenheiten und/oder ein Verzug des Bauteils kompensiert werden können.

Darüber hinaus, oder auch als eigenständige Ausführungsform, kann es von Vorteil sein, wenn das Tragteil 5 des Vakuumgreifers 1 einen oder mehrere Tragteilelemente 7 aufweist, welche schwenk- oder rotierbar am Tragteil 5 befestigt sind. Eine mögliche derartige Ausführungsform ist beispielhaft in Fig. 5 dargestellt, worin zwei Tragteilelemente 7 in Vertikalrichtung nach oben geschwenkt sind. Die Tragteilelemente 7 können mittels eigener elektro- und/oder pneumatischer Antriebe bewegt werden. Durch eine in der Anlagensteuerung 14 hinterlegte Information zu Abmessungen und/oder Geometrie der zu transportierenden Bauteile 3 können die Tragteilelemente 7 bei Bedarf zu einer Vergrößerung oder Verkleinerung der verfügbaren Ansaugebene 19 genutzt werden. Die Tragteilelemente 7 können ebenso verstellbare Halteelemente 27 und/oder verstellbare Sauger 4 aufweisen. Die Ansteuerung, sowie Zuordnung der Sauger 4 zu einem ersten und/oder zweiten Vakuumkreis 9,11 kann analog zu den zuvor genannten Beispielen ausgebildet sein. Wie aus Fig. 5 ersichtlich kann diese Maßnahme zur einfachen, automatisierten Anpassung der verfügbaren Anzahl an Saugern 4 bzw. des Platzbedarfs des Tragteils 5 genutzt werden.

Die in den Fig. 1 und 2, sowie Fig. 4 und 5 dargestellten Vakuumgreifer 1 können einen oder mehrere nicht näher dargestellte zweite Sensorvorrichtungen 17 aufweisen, welche als optische Sensoren ausgebildet sind. Es ist für den Fachmann leicht vorstellbar, derartige Sensoren und insbesondere deren Lichtquellen auch innerhalb eines Saugers 4 anzuordnen, wie dies durch die Fig. 2, 4 und 5 angedeutet ist. Auf eine separate, detaillierte Darstellung der ersten und zweiten Sensorvorrichtungen 16,17 wurde im Rahmen dieser Ausführungen verzichtet, da es dem Fachmann obliegt gemäß den obigen Angaben geeignete Positionen und/oder Sensoren auszuwählen und bedarfsgemäß anzuordnen.

Die Darstellungen der Fig.1 bis Fig.5 stellen mögliche Ausführungsvarianten dar, wobei an dieser Stelle bemerkt sei, dass die Erfindung nicht auf die speziell dargestellten Ausführungsvarianten derselben eingeschränkt ist, sondern vielmehr auch eine oder mehrere Kombinationen der einzelnen Ausführungsvarianten untereinander möglich sind. Der Kürze halber wird auf eine separate Darstellung verzichtet und auf die allgemeine Beschreibung verwiesen. Der Schutzbereich ist durch die Ansprüche bestimmt. Die Beschreibung und die Zeichnungen sind jedoch zur Auslegung der Ansprüche heranzuziehen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Vakuumgreifer
- 2: Bearbeitungsmaschine
- 3: Bauteil
- 4: Sauger
- 5: Tragteil
- 6: Tragarm
- 7: Tragteilelement
- 8: erster Vakuumerzeuger
- 9: erster Vakuumkreis
- 10: zweiter Vakuumerzeuger
- 11: zweiter Vakuumkreis
- 12: erste Gruppe
- 13: zweite Gruppe
- 14: Anlagensteuerung
- 15: Druckluftversorgung
- 16: erste Sensorvorrichtung
- 17: zweite Sensorvorrichtung
- 18: Vakuumtank
- 19: Ansaugebene
- 20: optische und/oder akustische Warneinrichtung
- 21: Umgebungsüberwachung
- 22: Bewegungs-/ Bearbeitungsbereichs
- 23: Oberfläche
- 24: Ausnehmung
- 25: Aufnahmeort
- 26: Ablageplatz
- 27: Halteelement

## Patentansprüche

1. Verfahren zum Transport von plattenförmigen Bauteilen (3), insbesondere Blechteilen, umfassend die Verfahrensschritte:
- Bereitstellen eines automatisierten Vakuumgreifers (1), der Vakuumgreifer (1) umfassend eine Mehrzahl von Saugern (4), welche an einem bevorzugt beweglichen Tragteil (5) angeordnet sind,
einen ersten Vakuumerzeuger (8) zur Ausbildung eines ersten Vakuumkreises (9),
einen zweiten Vakuumerzeuger (10) zur Ausbildung eines zweiten Vakuumkreises (11), zumindest ein mit einer Anlagensteuerung (14) verbundenes Schaltelement zum automatisierten Umschalten des ersten Vakuumkreises (9) auf den zweiten Vakuumkreis (11),
zumindest eine mit zumindest dem ersten und zweiten Vakuumerzeuger (8) verbundene Druckluftversorgung (15),
und zumindest eine erste und zweite Sensorvorrichtung (16,17), wobei
der erste Vakuumerzeuger (8) einer ersten vorgebbaren Gruppe (12) von Saugern (4) zugeordnet ist und der zweite Vakuumerzeuger (10) zur Ausbildung des im Notfall aktivierbaren, zum ersten Vakuumkreis (9) redundanten, zweiten Vakuumkreises (11) mit einem Vakuumtank (18) verbunden ist und
wobei die zumindest eine erste Sensorvorrichtung (16) zur Überwachung des Vakuums zumindest am ersten Vakuumkreis (9) ausgebildet ist und
die zumindest eine zweite Sensorvorrichtung (17) einen optischen Sensor zur Erfassung einer Relativbewegung des Bauteils (3) während eines Transportvorgangs aufweist;
- Aufgreifen eines Bauteils (3) mittels dem Vakuumgreifer (1) durch Ausbildung eines Vakuums an zumindest einem Sauger (4) und einer Oberfläche (23) des Bauteils (3) wodurch der erste Vakuumkreis (9) gebildet wird;
- fortlaufende Überwachung des Vakuums des ersten Vakuumkreises (9) mittels der zumindest einen ersten Sensorvorrichtung (16)
- laufende Überwachung einer Position des Bauteils (3) relativ zu zumindest der als optischer Sensor ausgebildeten zweiten Sensorvorrichtung (17) des Vakuumgreifers (1);
- Transport des Bauteils (3) zu einem vorgebbaren Bestimmungsort, wobei im Falle einer detektieren Relativbewegung des Bauteils (3) die Auslösung eines Alarms in der Anlagensteuerung (14) erfolgt.

2. Verfahren nach Anspruch 1 **dadurch gekennzeichnet, dass** im Falle einer detektierten Relativbewegung des Bauteils (3) und/oder einer unbeabsichtigten Unterbrechung des ersten Vakuumkreises (9) der zweite, zum ersten Vakuumkreis (9) redundante Vakuumkreis (11) aktiviert wird, wobei der Vakuumtank (18) zur kurzzeitigen Versorgung des zweiten Vakuumkreises (11) verwendet wird.

3. Verfahren nach Anspruch 1oder 2 **dadurch gekennzeichnet, dass** im Falle einer detektierten Bewegung innerhalb eines Bearbeitungsbereichs (22) des Vakuumgreifers (1) durch eine mit der Anlagensteuerung verbundenen Umgebungsüberwachung ein Alarm in der Anlagensteuerung (14) ausgelöst wird.

4. Verfahren nach einem der Ansprüche 1 bis 3 **dadurch gekennzeichnet, dass** bei Auslösung eines Alarms eine kontrollierte Reduktion einer Bewegungsgeschwindigkeit eines Tragarms (6) des Vakuumgreifers (1) und/oder eine Absenkung des transportierten Bauteils (3) in Vertikalrichtung nach unten vorgenommen wird.

5. Verfahren nach einem der Ansprüche 1 bis 4 **dadurch gekennzeichnet, dass** bei Auslösung eines Alarms in der Anlagensteuerung (14) eine akustische und/oder optische Warneinrichtung (20) am Tragteil (5) und/oder an einem Gehäuse des Vakuumgreifers (1) aktiviert wird.

## Claims

1. A method for conveying plate-shaped components (3), in particular sheet metal parts, comprising the following method steps:
- providing an automated vacuum gripper (1), the vacuum gripper (1) comprising
a plurality of suction elements (4), which are arranged at a preferably movable support part (5),
a first vacuum generator (8) for forming a first vacuum circuit (9),
a second vacuum generator (10) for forming a second vacuum circuit (11),
at least one switching element connected to a system controller (14) for automated switch-over of the first vacuum circuit (9) to the second vacuum circuit (11),
at least one compressed air supply (15) connected to at least the first and the second vacuum generators (8),
and at least one first and second sensor device (16, 17), wherein
the first vacuum generator (8) is associated with a first predeterminable group (12) of suction elements (4), and the second vacuum generator (10) is connected to a vacuum tank (18) for forming a second vacuum circuit (11), which may be activated in case of emergency and is redundant to the first vacuum circuit (9), and
wherein the at least one first sensor device (16) is formed for monitoring the vacuum at least at the first vacuum circuit (9), and
the at least one second sensor device (17) has an optical sensor for detecting a relative movement of the component (3) during a conveying operation;
- picking a component (3) up by means of the vacuum gripper (1) by creating a vacuum at at least one suction element (4) and a surface (23) of the component (3), thus forming the first vacuum circuit (9);
- continuously monitoring the vacuum of the first vacuum circuit (9) by means of the at least one first sensor device (16);
- continuously monitoring a position of the component (3) relative to at least the second sensor device (17) of the vacuum gripper (1), which sensor device (17) is configured as an optical sensor;
- conveying the component (3) to a predeterminable destination, wherein, if a relative movement of the component (3) has been detected, an alarm is triggered in the system controller (14).

2. The method according to claim 1, **characterized in that** in the case of a detected relative movement of the component (3) and/or an unintentional interruption of the first vacuum circuit (9), the second vacuum circuit (11), which is redundant to the first vacuum circuit (9), is activated, wherein the vacuum tank (18) is used for supplying the second vacuum circuit (11) for a short period of time.

3. The method according to claim 1 or 2, **characterized in that** in the event of a detected movement within a machining area (22) of the vacuum gripper (1), an alarm in the system controller (14) is triggered by an environment monitoring means connected to the system controller.

4. The method according to one of claims 1 to 3, **characterized in that** when an alarm is triggered, the speed of movement of a support arm (6) of the vacuum gripper (1) is reduced in a controlled manner and/or the conveyed component (3) is lowered in the vertical direction.

5. The method according to one of claims 1 to 4, **characterized in that** when an alarm is triggered in the system controller (14), an acoustic and/or optical warning device (20) is activated at the support part (5) and/or at a housing of the vacuum gripper (1).

## Revendications

1. Procédé de transport de pièces en forme de plaques (3), plus particulièrement de tôles, comprenant les étapes suivantes :
- mise à disposition d'un préhenseur à ventouses (1), le préhenseur à ventouses (1) comprenant une pluralité de ventouses (4) qui sont disposées sur une partie de support (5), de préférence mobile,
un premier générateur de vide (8) pour la formation d'un premier circuit de vide (9), un deuxième générateur de vide (10) pour la formation d'un deuxième circuit de vide (11),
au moins un élément de commutation, relié avec une commande d'installation (14), pour la commutation automatisée du premier circuit de vide (9) vers le deuxième circuit de vide (11),
au moins une alimentation en air comprimé (15) reliée avec au moins le premier et le deuxième générateur de vide (8),
et au moins un premier et un deuxième dispositif de capteur (16, 17), dans lequel le premier générateur de vide (8) correspond à un premier groupe prédéterminé (12) de ventouses (4) et le deuxième générateur de vide (10) est relié, pour la formation du deuxième circuit de vide (11), activable en cas d'urgence, redondant par rapport au premier circuit de vide (9), avec un réservoir de vide (18) et
dans lequel l'au moins un dispositif de capteur (16) est conçu pour la surveillance du vide au moins au niveau du premier circuit de vide (9) et
l'au moins un deuxième dispositif de capteur (17) comprend un capteur optique pour la détection d'un mouvement relatif de la pièce (3) pendant un processus de transport ;
- préhension d'une pièce (3) au moyen du préhenseur à ventouses (1) par la formation d'un vide au niveau d'au moins une ventouse (4) et d'une surface (23) de la pièce (3), ce qui forme le premier circuit de vide (9) ;
- surveillance en continu du vide du premier circuit de vide (9) au moyen de l'au moins un premier dispositif de capteur (16)
- surveillance en continu d'une position de la pièce (3) au moins par rapport au deuxième dispositif de capteur (17), conçu comme un capteur optique, du préhenseur à ventouses (1) ;
- transport de la pièce (3) vers une destination prédéterminée, dans lequel, dans le cas d'un mouvement relatif détecté de la pièce (3), une alarme est déclenchée dans la commande de l'installation (14).

2. Procédé selon la revendication 1, **caractérisé en ce que**, dans le cas d'un mouvement relatif détecté de la pièce (3) et/ou d'une interruption par inadvertance du premier circuit de vide (9), le deuxième circuit de vide (11), redondant par rapport au premier circuit de vide (9), est activé, dans lequel le réservoir de vide (18) est utilisé pour l'alimentation à court terme du deuxième circuit de vide (11).

3. Procédé selon la revendication 1 ou 2, **caractérisé en ce que**, dans le cas d'un mouvement relatif détecté à l'intérieur d'une zone de traitement (22) du préhenseur à ventouses (1), une alarme est déclenchée dans la commande de l'installation (14) par un système de surveillance d'environnement relié à la commande l'installation.

4. Procédé selon l'une des revendications 1 à 3, **caractérisé en ce que**, lors du déclenchement d'une alarme, a lieu une réduction contrôlée d'une vitesse de déplacement d'un bras de support (6) du préhenseur à ventouses (1) et/ou un abaissement de la pièce (3) transportée dans la direction verticale vers le bas.

5. Procédé selon l'une des revendications 1 à 4, **caractérisé en ce que**, lors du déclenchement d'une alarme dans la commande de l'installation (14), un dispositif d'avertissement sonore et/ou optique (20) sur la partie de support (5) et/ou sur un boîtier du préhenseur à ventouses (1) est activé.
